# EUROPEAN PATENT SPECIFICATION

(11) **EP 1 848 089 B1**
(45) Date of publication and mention of the grant of the patent: **01.05.2013**
(21) Application number: 07251184.3
(22) Date of filing: 21.03.2007
(51) Int. Cl.: H02J 7/14

(54) **Electrical circuit and motorcycle including electrical circuit**
Elektrische Schaltung und Motorrad mit einer elektrischen Schaltung
Circuit électrique et motocyclette comportant un circuit électrique

(30) Priority: 17.04.2006 JP 2006113261
(43) Date of publication of application: 24.10.2007
(73) Proprietor: Yamaha Hatsudoki Kabushiki Kaisha, Iwata-shi, Shizuoka 438-8501 (JP)
(72) Inventor: Ogawa, Kazuhiro, Iwata-shi Shizuoka-ken 438-8501 (JP); Maehashi, Nobuhiko, Iwata-shi Shizuoka-ken 438-8501 (JP); Kitamura, Ryou, Iwata-shi Shizuoka-ken 438-8501 (JP)
(74) Representative: Moreland, David

(56) References cited:
- EP-A2- 0 684 381
- JP-A- 9 324 732
- JP-A- 10 201 125

## Description

### FILED OF THE INVENTION

The present invention relates to an electrical circuit for a motorcycle or the like, and in particular to an electrical circuit for protecting multiple components from over-voltage conditions.

### BACKGROUND TO THE INVENTION

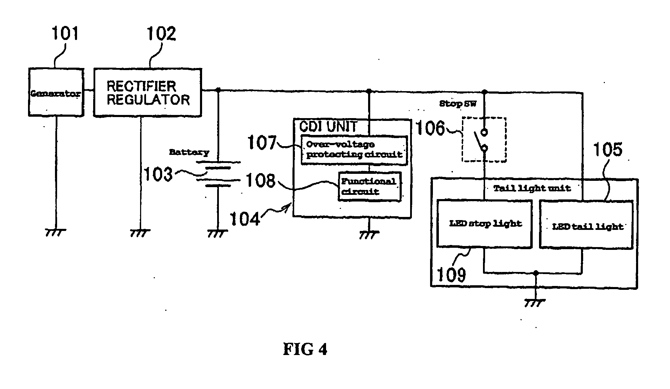

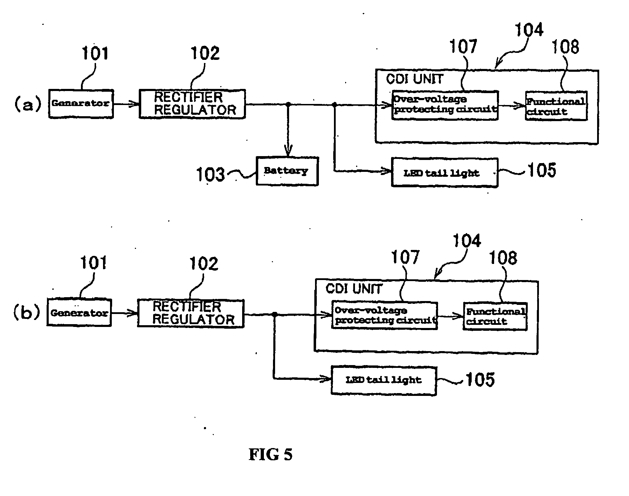

Conventionally, as shown in FIGs. 4 and 5, a power supply device for a vehicle such as a motorcycle includes a generator 101, a power supply control section (rectifier/regulator) 102 for rectifying electricity outputted from the generator 101 and for regulating voltage thereof, and a battery 103 detachably connected to the power supply control section 102. A first electrical component, for example, a CDI unit 104, includes an over-voltage protecting circuit 107 and a functional circuit 108. A second electrical component, for example, an LED tail light 105 and a stop switch 106, does not include an over-voltage protecting circuit. The first and second electrical components are connected to the battery 103.

In the conventional power supply device for a vehicle described above, the generator 101 generates electric power and the power supply control section 102 rectifies electricity and regulates voltage to supply the power, as shown in FIG. 5(a), to the CDI unit 104 and a tail light unit having the LED tail light 105 and an LED stop light 109 while charging the battery 103. The stop switch 106 closes when a rider operates a brake lever or a brake pedal (not shown) such that the LED stop light 109 is turned on.

In some situations, the motorcycle or the like is used in such a manner that an engine is started with a kick starter, for example when the battery 103 is removed because weight reduction is required as used for races or because the battery 103 cannot be exchanged for a new one due to an economical reason in regions such as Southeast Asia. If the battery 103 is removed as thus noted, the power supply control section 102 directly supplies the power to the CDI unit 104, the LED tail light 105 and so forth without any charge function to the battery 103 being provided, as shown in FIG. 5(b).

Prior art reference JP-A-09-324732 relates to an "ignition controller" in which, when a supply voltage from a generator is lower than a preset value at a moment of engine ignition, the power supply to a battery and load devices is stopped; thereby, a sufficient ignition voltage can be supplied only by a kick starter even if a battery malfunctions.

In prior art reference JP-A-2004-350441 a "power supply circuit of automobile" is proposed in which, by charging a battery using a first coil and supplying electric power capacity that is necessary for engine control loads using only a second coil, sufficient electric power is supplied to the engine control loads only by a kick start under an insufficient charge condition of the battery.

Furthermore, in prior art reference JP-A-06-141457 a "permanent-magnet AC generator" is proposed which has an over-voltage preventing circuit that prevents an over-voltage output of a permanent-magnet type AC generator from being applied to loads such as, for example, electronic equipment.

In prior art reference JP-A-10-201125 a "voltage adjusting circuit for generator for two-wheeled vehicle" is proposed which has means for preventing an over-voltage from being applied to loads connected to battery terminals in parallel to a battery even if the battery accidentally comes off or situations like this occur.

In the conventional art shown in FIGs. 4 and 5 and described above, if the battery 103 is removed so that the motorcycle is used without the charge function, the regulation can be delayed because of the characteristic of the power control section 102 and as such the over-voltage can be applied to the CDI unit 104, the LED tail light 105 and so forth. Thus, the second electrical component, i.e., the tail light unit including the LED tail light 105 and the LED stop light 109, neither of which having any over-voltage protecting circuit, can be damaged. Particularly, there is a problem that LED parts such as the LED tail light 105 can be easily damaged because of their low tolerance against the over-voltage. Additionally, it is to be noted that it is not assumed in the conventional art disclosed in references JP-A-09-324732 and JP-A-2004-350441 that the motorcycle is used with the battery removed and thus the same problem can arise.

Also, in the conventional art disclosed in references JP-A-06-141457 and JP-A-10-201125, an over-voltage preventing circuit formed with a thyristor(s), a resister(s) and a capacitor(s) is required. Thus, there arises a problem that the number of parts increases and a raise in cost occurs.

EP0684381 describes a device for selectively feeding power to a DC load (battery), an AC load and an ignition circuit of an engine. A single power winding of a generator is selectively connectable via polarized diodes and electronic switch means to the ignition circuit and electrical load circuits, under the control of a voltage regulator. The voltage regulator comprises electronic switches and a control unit. When a voltage produced by the generator starts to rise, a switch is closed by the control unit in order to supply a voltage from the generator to the load. This also increases a voltage on a capacitor connected to the inverting inlet of a comparator such that when the voltage reaches a reference voltage, the electronic switch is opened/switched off and the voltage supply to the load is switched off.

After this first phase, two situations are possible. Either the battery has a voltage lower than a reference value. In this case, the battery is supplied with a charging current from the generator via a switch. If the voltage of the battery exceeds the value of the reference voltage, then the generator is short circuited to Earth.

It is among objects of the present invention to obviate or at least mitigate theseand/or other problems associated with the prior art.

It is also among objects of the present invention to provide a voltage adjusting circuit that can prevent damage of an electrical component having no over-voltage protecting circuit by a simple structure even though a battery is removed in a use state, so that reliability of the electrical component can be improved without any raise in cost occurring.

### SUMMARY OF THE INVENTION

According to a first aspect of the present invention there is provided an electrical circuit for a vehicle, said circuit comprising:
a first electrical component having an over-voltage protecting circuit;
a second electrical component; and
a generator for supplying electrical power to the first and second electrical components, wherein
the second electrical component is coupled to the over-voltage protecting circuit of the first electrical component.

Accordingly, if the circuit of the present invention is exposed to over-voltage conditions, such as when an electrical load is de-coupled from the circuit, the electrical power from the generator will be supplied to the second electrical component through the over-voltage protecting circuit of the first electrical component. Damage of the second electrical component can thus advantageously be prevented without requiring any additional or dedicated protecting components or circuitry. Accordingly, the reliability of the second electrical component can be improved without any raise in cost.

The generator may be adapted to be driven by an engine of a vehicle.

The electrical circuit may further comprise a power supply controller adapted to rectify electricity outputted from the generator and to regulate the voltage thereof.

The electrical circuit may further comprise a battery, such as a rechargeable battery, which battery may be detachably coupled to the electrical circuit. Accordingly, in circumstances where the battery may be removed from the electrical circuit of the present invention, any over-voltage condition will be accommodated by the over-voltage protecting circuit of the first electrical component.

The generator may be adapted to directly or indirectly supply power to the first and second electrical components. For example, the generator may be adapted provide electrical power to the components via a battery.

The first electrical component may comprise a CDI unit. The second electrical component may comprise an LED lamp, wherein the LED lamp may comprise an LED tail light. The first and second electrical components may comprise any one or combination of components which are known for use with vehicles.

According to a second aspect of the present invention there is provided a motorcycle comprising the electrical circuit according to the first aspect.

According to a third aspect of the present invention there is provided a voltage adjusting circuit comprising a generator driven by an engine; a power supply control section for rectifying electricity outputted from the generator and for regulating voltage thereof; a detachable battery; a first electrical component having an over-voltage protecting circuit; and a second electrical component having no over-voltage protecting circuit. The voltage adjusting circuit supplies electric power to the first electrical component and the second electrical component, the first electrical component is connected to the battery, and the second electrical component is connected to the over-voltage protecting circuit of the first electrical component.

Accordingly, if a battery is removed in a use state, the electric power is supplied to the second electrical component from the power supply control section through the over-voltage protecting circuit of the first electrical component. Damage of the second electrical component thus can be prevented by such a simple structure. Accordingly, the reliability of the second electrical component can be improved without any raise in cost.

The first electrical component may include a CDI unit for controlling ignition of the engine.

The second electrical component may include an LED lamp.

The LED lamp may include an LED tail light.

According to the feature (s) of the present invention, even though the motorcycle is used with a battery removed, damage of an electrical component having no over-voltage protecting circuit, particularly, an LED parts such as the LED tail light can be prevented by a simple structure. Accordingly, a voltage adjusting circuit that can improve the reliability of the electrical component without any raise in cost can be provided.

### BRIEF DESCRIPTION OF THE DRAWINGS

These and other aspects of the present invention will now be described, by way of example only, with reference to the accompanying drawings in which:
FIG. 1 is a left side elevational view of a motorcycle according to an embodiment of the present invention;
FIG. 2 is an electrical circuit diagram of an electrical circuit according to an embodiment of the present invention;
FIG. 3 is a block diagram diagrammatically representing a flow of electricity in the electrical circuit shown in FIG. 2;
FIG. 4 is an electrical circuit diagram of a conventional voltage adjusting circuit; and
FIG. 5 is a block diagram diagrammatically representing a flow of electricity in the conventional voltage adjusting circuit shown in FIG. 4.

### DETAILED DESCRIPTION OF THE DRAWINGS

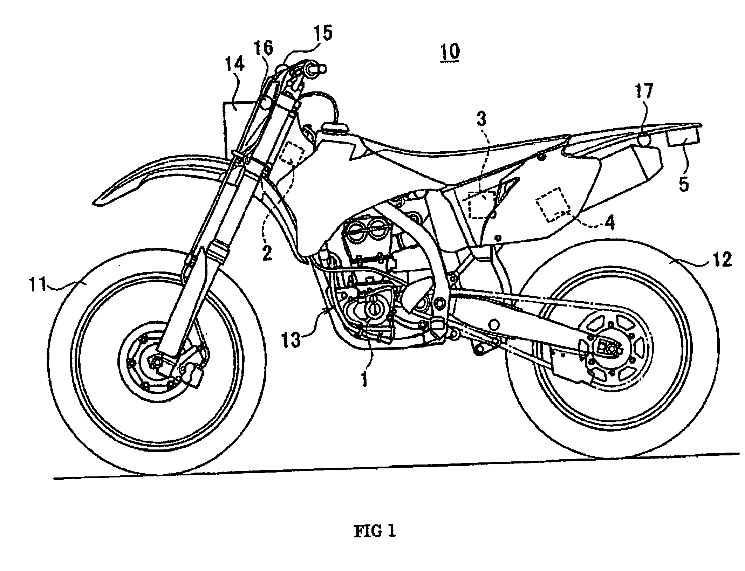

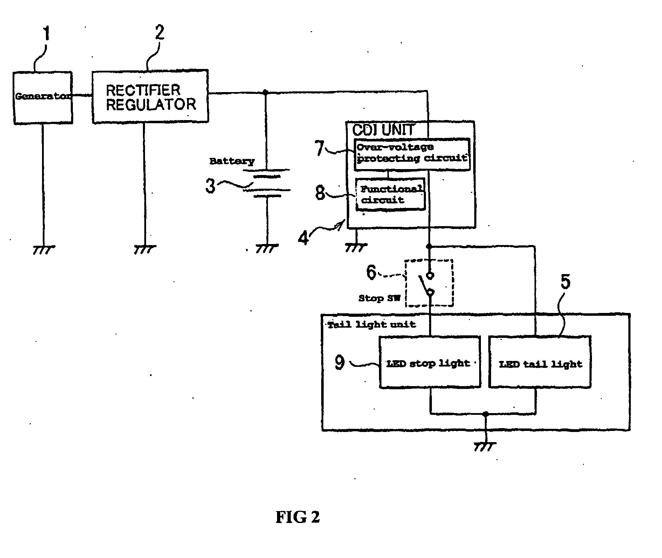

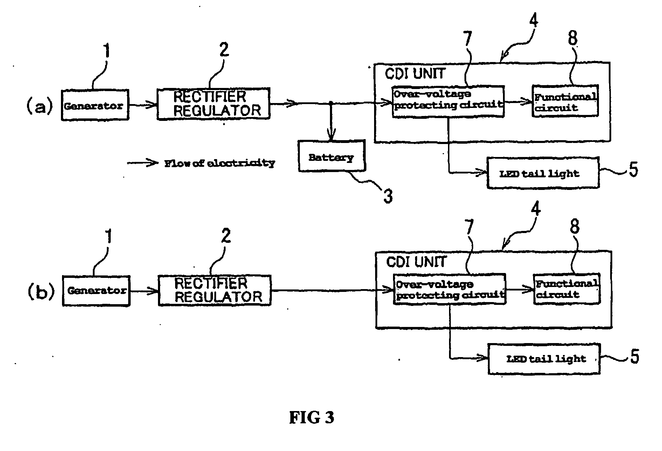

With reference to drawings, an embodiment of an electrical circuit according to the present invention will be described. FIG. 1 is a left side elevational view of a motorcycle 10 having a circuit according to the embodiment. FIG. 2 is an electrical circuit diagram of the circuit according to the embodiment of the present invention. FIG. 3 is a block diagram diagrammatically representing a flow of electricity in the circuit according to the embodiment of the present invention.

The circuit in this embodiment is applied to a motorcycle. As shown in FIG. 1, the motorcycle 10 has a front wheel 11 and a rear wheel 12. An engine 13 drives the rear wheel 12 and a generator 1. As shown in FIG. 2, a first electrical component in the form of a CDI unit 4 is connected to a battery 3 which is removable. Also, a second electrical component in the form of a tail light unit is connected to an over-voltage protecting circuit 7 of the CDI unit. The tail light unit includes an LED tail light 5 and an LED stop light 9 both functioning as LED lamps, and a stop switch 6. Other electrical components such as a head light 14, a meter 15, a front flasher 16, rear flasher 17 and so forth are provided. Additionally, as shown in FIGs. 2 and 3, the CDI unit 4 is formed with the over-voltage protecting circuit 7 and a functional circuit 8.

The functional circuit 8 of the CDI unit 4 boosts electric power supplied from the generator 1 and charges a capacitor (not shown) in the functional circuit 8. An ignition signal then makes the capacitor discharge at a burst to a primary coil of an ignition coil (not shown) . Thereby, a high voltage is applied to the primary coil of the ignition coil. The number of turns of the primary coil of the ignition coil thus is reduced to accelerate a speed of induction of a voltage in a secondary coil.

Because a semiconductor(s) such as, for example, a thyristor(s) (not shown) is employed in such a functional circuit 8, the circuit can be damaged if an over-voltage is applied to the functional circuit 8. A rectifier/regulator 2 which functions as a voltage supply controller is provided to control a power amount generated by the generator 1 so as to prevent the over-voltage from being generated.

However, because the rectifier/regulator 2 detects a battery voltage to control the power amount generated by the generator 1, if the motorcycle is used under a condition that the battery 3 is removed, the rectifier/regulator 2 cannot sufficiently function and the over-voltage can be applied to the functional circuit 8. Therefore, the CDI unit 4 is provided with the over-voltage protecting circuit 7 so that electric power with a stable voltage is further supplied to the functional circuit 8.

Wirings are made in such a manner that the electric power is supplied to the LED tail light 5 through the over-voltage protecting circuit 7. Because the LED forming the LED tail light 5 is a semiconductor, it can be damaged if the over-voltage is applied thereto, in a similar manner to the functional circuit 8. However, the power is supplied through the over-voltage protecting circuit 7 under the stable condition of the voltage, and the damage can be avoided.

Accordingly, in a situation that the motorcycle 10 is used with the battery 3 mounted, the generator 1, as shown in FIG. 3(a), generates electric power and the rectifier/regulator 2 rectifies the power and regulates the voltage thereof to supply the power to the CDI unit 4 and the LED tail light 5, while charging the battery 3. Therefore, the power can be supplied from the rectifier/regulator 2 to the CDI unit 4 and the LED tail light 5 under the stable condition of the voltage (no over-voltage condition).

Also, in another situation when the motorcycle 10 is used by starting the engine 13 with the battery 3 removed for weight reduction or for economical reasons, the power, as shown in FIG. 3(b), is supplied from the rectifier/regulator 2 to the CDI unit 4 without any charge function to the battery 3 being provided, and also is supplied to the LED tail light 5 through the over-voltage protecting circuit 7. Thus, the over-voltage protecting circuit 7 of the CDI unit 4 can protect the LED tail light 5 from the over-voltage condition. That is, even though the motorcycle 10 is used with the battery 3 removed, the damage of the electrical component having no over-voltage protecting circuit, particularly the LED tail light 5, can be prevented by the simple structure. Accordingly, the reliability of the electrical component can be improved without any raise in cost.

It should be understood that the embodiment described above is merely exemplary and that various modifications may be made thereto without departing from the scope of the invention. Persons skilled in the art can reveal various alternative embodiments from this disclosure.

For example, in the embodiment of the present invention described above, the case in which the second electrical component having no over-voltage protecting circuit is formed with the LED tail light 5 is exemplified. However, even if another second electrical component that has no over-voltage protecting circuit, for example, the rear flasher 17 uses an LED lamp and the LED lamp is connected to the over-voltage protecting circuit 7 of the first electrical component, the same action and effect can be obtained.

Also, in the embodiment described above, the case in which the first electrical component having the over-voltage protecting circuit 7 is formed with the CDI unit 4 that makes the ignition control of the engine 13 is exemplified. However, even if an LED lamp of the front flasher 16 or a pilot lamp (not shown) of the meter 15 as the second electrical component is connected to an over-voltage protecting circuit of another first electrical component, for example, the meter 15, the same action and effect can be obtained.

As thus described, it is a matter of course that the present invention covers various embodiments or the like which are not described herein. Accordingly, the technical scope of the present invention is only limited by the appended claims.

### Description of Reference Numerals

| | |
|---|---|
| 1: | generator |
| 2: | rectifier/regulator (power supply control section) |
| 3: | battery |
| 4: | CDI unit (first electrical component) |
| 5: | LED tail light (second electrical component, LED lamp) |
| 6: | stop switch |
| 7: | over-voltage protecting circuit |
| 8: | functional circuit |
| 10: | motorcycle |
| 11: | front wheel |
| 12: | rear wheel |
| 13: | engine |
| 14: | head light |
| 15: | meter |
| 16: | front flasher |
| 17: | rear flasher |

## Claims

1. An electrical circuit for a vehicle, said circuit comprising:
a first electrical component (4) having an over-voltage protecting circuit (7);
a second electrical component (5); and
a generator (1) for supplying electrical power to the first and second electrical components (4, 5), wherein
the second electrical component (5) is connected to the over-voltage protecting circuit (7) of the first electrical component (4) and wherein electrical power supplied by the generator (1) is supplied to the second component (5) through the over-voltage protecting circuit (7) of the first electrical component (4).

2. The electrical circuit of claim 1, wherein the generator (1) is adapted to be driven by an engine (13) of a vehicle (10).

3. The electrical circuit of claim 1 or 2, further comprising a power supply controller (2) adapted to rectify electricity outputted from the generator (1) and to regulate the voltage thereof.

4. The electrical circuit of claim 1, 2 or 3, further comprising a battery (3).

5. The electrical circuit of claim 4, wherein the battery (3) is detachably coupled to the electrical circuit.

6. The electrical circuit of any preceding claim, wherein the first electrical component (4) comprises a CDI unit.

7. The electrical circuit of any preceding claim, wherein the second electrical component (5) comprises an LED lamp.

8. The electrical circuit of claim 7, wherein the LED lamp comprises an LED tail light.

9. A motorcycle (10) comprising the electrical circuit of any preceding claim.

10. The electrical circuit of claim 1, wherein the electrical circuit is a voltage adjusting circuit further comprising:
an engine (13), wherein the generator(1) is driven by the engine (13);
a power supply control section (2) for rectifying electricity outputted from the generator (1) and for regulating voltage thereof;
a battery (3) detachably placed downstream of the power supply control section (2); wherein
the second electrical component (5) has no over-voltage protecting circuit;and
the first electrical component (4) is connected to the power supply control section (2).

11. A motorcycle (10) comprising the voltage adjusting circuit of claim 10.

## Patentansprüche

1. Elektrische Schaltung für ein Fahrzeug, wobei die Schaltung aufweist:
ein erstes elektrisches Bauelement (4) mit einer Überspannungsschutzschaltung (7);
ein zweites elektrisches Bauelement (5); und
einen Generator (1) für das Zuführen von elektrischem Strom zum ersten und zweiten elektrischen Bauelement (4, 5), wobei
das zweite elektrische Bauelement (5) mit der Überspannungsschutzschaltung (7) des ersten elektrischen Bauelementes (4) verbunden ist, und wobei der vom Generator (1) gelieferte elektrische Strom dem zweiten Bauelement (5) mittels der Überspannungsschutzschaltung (7) des ersten elektrischen Bauelementes (4) zugeführt wird.

2. Elektrische Schaltung nach Anspruch 1, bei der der Generator (1) so ausgebildet ist, dass er von einem Motor (13) eines Fahrzeuges (10) angetrieben wird.

3. Elektrische Schaltung nach Anspruch 1 oder 2, die außerdem einen Stromversorgungsregler (2) aufweist, der ausgebildet ist, um die vom Generator (1) abgegebene Elektrizität gleichzurichten, und um deren Spannung zu regulieren.

4. Elektrische Schaltung nach Anspruch 1, 2 oder 3, die außerdem eine Batterie (3) aufweist.

5. Elektrische Schaltung nach Anspruch 4, bei der die Batterie (3) mit der elektrischen Schaltung lösbar verbunden ist.

6. Elektrische Schaltung nach einem der vorhergehenden Ansprüche, bei der das erste elektrische Bauelement (4) eine CDI-Einheit aufweist.

7. Elektrische Schaltung nach einem der vorhergehenden Ansprüche, bei der das zweite elektrische Bauelement (5) eine LED-Lampe aufweist.

8. Elektrische Schaltung nach Anspruch 7, bei der die LED-Lampe ein LED-Schlusslicht aufweist.

9. Motorrad (10), das eine elektrische Schaltung nach einem der vorhergehenden Ansprüche aufweist.

10. Elektrische Schaltung nach Anspruch 1, bei der die elektrische Schaltung eine Spannungseinstellschaltung ist, die außerdem aufweist:
einen Motor (13), wobei der Generator (1) durch den Motor (13) angetrieben wird;
einen Stromversorgungssteuerabschnitt (2) für das Gleichrichten der vom Generator (1) abgegebenen Elektrizität und für das Regulieren von deren Spannung;
eine Batterie (3), die stromabwärts vom Stromversorgungssteuerabschnitt (2) lösbar angeordnet ist;
wobei
das zweite elektrische Bauelement (5) keine Überspannungsschutzschaltung aufweist; und
das erste elektrische Bauelement (4) mit dem Stromversorgungssteuerabschnitt (2) verbunden ist.

11. Motorrad (10), das die Spannungseinstellschaltung nach Anspruch 10 aufweist.

## Revendications

1. Circuit électrique pour un véhicule, ledit circuit comprenant :
un premier composant électrique (4), comportant un circuit de protection contre les surtensions (7) ;
un deuxième composant électrique (5) ; et
un générateur (1), pour assurer l'alimentation en énergie électrique des premier et deuxième composants électriques (4, 5) ; dans lequel
le deuxième composant électrique (5) est connecté au circuit de protection contre les surtensions (7) du premier composant électrique (4), l'énergie électrique fournie par le générateur (1) étant amenée vers le deuxième composant (5) à travers le circuit de protection contre les surtensions (7) du premier composant électrique (4).

2. Circuit électrique selon la revendication 1, dans lequel le générateur (1) est adapté pour être entraîné par un moteur (13) d'un véhicule (10).

3. Circuit électrique selon les revendications 1 ou 2, comprenant en outre un moyen de commande de l'alimentation en énergie, adapté pour rectifier l'électricité émise par le générateur (1) et pour régler sa tension.

4. Circuit électrique selon les revendications 1, 2 ou 3, comprenant en outre une batterie (3).

5. Circuit électrique selon la revendication 4, dans lequel la batterie (3) est accouplée de manière détachable au circuit électrique.

6. Circuit électrique selon l'une quelconque des revendications précédentes, dans lequel le premier composant électrique (4) comprend une unité CDI.

7. Circuit électrique selon l'une quelconque des revendications précédentes, dans lequel le deuxième composant électrique (5) comprend une lampe à DEL.

8. Circuit électrique selon la revendication 7, dans lequel la lampe à LED comprend un feu arrière à DEL.

9. Motocyclette (10), comprenant le circuit électrique selon l'une quelconque des revendications précédentes.

10. Circuit électrique selon la revendication 1, dans lequel le circuit électrique est un circuit d'ajustement de la tension, comprenant en outre :
un moteur (13), le générateur (1) étant entraîné par le moteur (13) ;
une section de commande de l'alimentation en énergie (2), pour rectifier l'électricité émise par le générateur (1) et pour régler sa tension ;
une batterie (3), agencée de manière détachable en aval de la section de commande de l'alimentation en énergie (2) ; dans lequel
le deuxième composant électrique (5) ne comporte pas de circuit de protection contre les surtensions ; et
le premier composant électrique (4) est connecté à la section de commande de l'alimentation en énergie (2).

11. Motocyclette (10), comprenant le circuit d'ajustement de la tension selon la revendication 10.
